(19) 

Europäisches
Patentamt
European
Patent Office
Office européen
des brevets

(11)  **EP 4 775 947 A1**

(12)  **EUROPEAN PATENT APPLICATION**
published in accordance with Art. 153(4) EPC

(43) Date of publication:
**15.07.2026 Bulletin 2026/29**

(21) Application number: 24878789.7

(22) Date of filing: **23.09.2024**

(51) International Patent Classification (IPC):
*G01M 11/00* (2006.01)

(86) International application number:
**PCT/CN2024/120328**

(87) International publication number:
**WO 2025/082141 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.10.2023 CN 202311353953**

(71) Applicant: **Yangtze Optical Fibre and Cable Joint
Stock
Limited Company
Wuhan, Hubei 430074 (CN)**

(72) Inventors:
• **LI, Peng**
  **Wuhan, Hubei 430074 (CN)**
• **LUO, Jie**
  **Wuhan, Hubei 430074 (CN)**
• **ZHANG, Lei**
  **Wuhan, Hubei 430074 (CN)**
• **CAO, Beibei**
  **Wuhan, Hubei 430074 (CN)**

(74) Representative: **Lorenz Seidler Gossel Part. mbB
Widenmayerstr. 23
80538 München (DE)**

(54)  **METHOD FOR DETECTING END FACE OF HOLLOW-CORE MICROSTRUCTURE OPTICAL
FIBER AND MARKED HOLLOW-CORE MICROSTRUCTURE OPTICAL FIBER**

(57)    The present disclosure discloses a method for
detecting the end face of a hollow-core microstructured
optical fiber and a marked hollow-core microstructured
optical fiber. The method comprises the following steps:
(1) Imaging the end face of the hollow-core microstructured optical fiber to obtain an image of the end face of the
hollow-core microstructured optical fiber; (2) Marking
individual anti-resonant microstructure units in the image
of the end face of the hollow-core microstructured optical
fiber according to an asymmetry of the end face of the
hollow-core microstructured optical fiber; (3) performing
geometric parameter extraction, and Evaluating a geo-
metric uniformity of the hollow-core microstructured op-
tical fiber. According to the method for detecting the end
face of the hollow-core microstructured optical fiber provided by the present disclosure, an axial uniformity an-
d/or difference of the microstructure units is evaluated,
such that the geometric uniformity of the hollow-core
optical fiber is monitored. With the marked hollow-core
microstructured optical fiber provided by the present
disclosure, an image of an asymmetric end face may
be obtained without affecting transmission loss, thereby
achieving geometric uniformity detection or monitoring.

Fig. 3

## Description

## Field of the Invention

The present disclosure belongs to the technical field of optical communication, and more specifically, relates to a method for detecting the end face of a hollow-core microstructured optical fiber and a marked hollow-core microstructured optical fiber.

## Background of the Invention

Hollow-core microstructured optical fibers have the characteristics of a simple structure, a hollow-core single-mode light guidance, and a wide transmission spectrum; and have important applications in the fields of light-filling material interaction, nonlinear optics, gas detection, laser generation under gas, optofluidics, etc. A light guidance with large air hole fiber core has the characteristics of an ultra-low Rayleigh scattering, a low nonlinear coefficient, and an adjustable dispersion, and can provide a higher laser-damaged threshold, rendering it with potential applications in high-power laser transmission, ultraviolet/mid-infrared light transmission, pulse compression, optical soliton transmission, etc. Based on the air cores having the characteristics of an ultra-low loss, a low dispersion, a low nonlinearity, and a propagation speed close to the speed of light, the development of hollow-core microstructured optical fiber communication transmission and communication devices may be realized, thereby laying a foundation for the construction and development of the next generation of optical communication systems with an ultra-large capacity, a low latency and a high speed.

Although hollow-core microstructured optical fibers have great advantages in designs and applications, the transmission loss thereof has always been higher than that of traditional quartz fibers. In recent years, it has been found that, hollow-core microstructured optical fibers with a reasonable structural design based on the anti-resonant principle can effectively reduce transmission loss, and have potentials to be used as optical fibers for ultra-long distance communication. Further reducing attenuation is an important issue in the field of manufacturing hollow-core microstructured optical fibers.

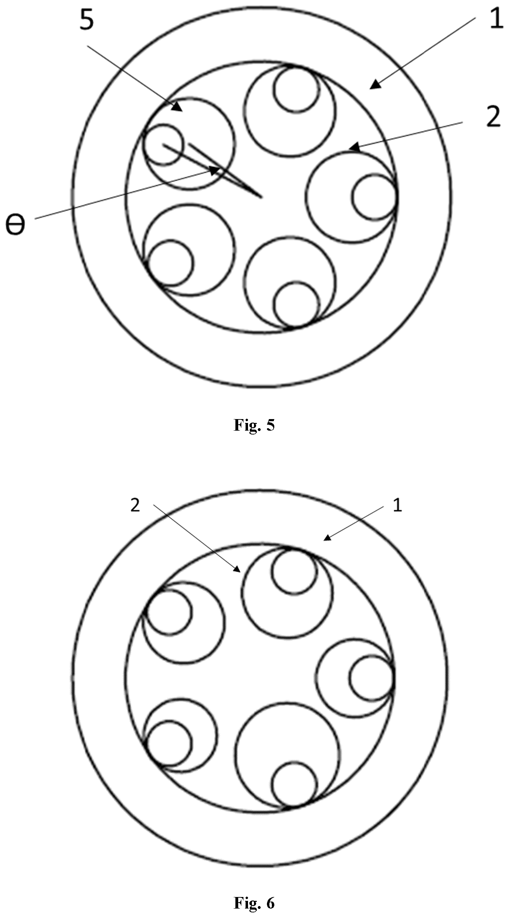

Although the known hollow-core anti-resonant optical fibers, especially optical fibers with nested structural elements can significantly reduce the attenuation of optical fibers, in the manufacturing process of hollow-core anti-resonant optical fibers, due to the non-uniformity of raw materials, deviations in the stacking process of nested structural elements, uneven thermal field distribution during the fiber drawing process, etc., the obtained hollow-core anti-resonant optical fibers may have anti-resonant structural elements with uneven sizes, as shown in Figure 6. Such an unevenness in the geometric structure will greatly affect the transmission loss of the hollow-core anti-resonant optical fibers.

However, it is currently impossible to control the geometric uniformity of the microstructural optical fibers, nor is it possible to detect or monitor the geometric uniformity of the microstructural optical fibers.

## Summary of the Invention

In view of the above-mentioned defects in the prior art or improvement needs, the present disclosure provides a method for detecting an end face of a hollow-core microstructured optical fiber and a marked hollow-core microstructured optical fiber, for the purpose of using a marking unit to break the symmetry of the acquired image of the end face of the optical fiber, thereby identifying the images of the end faces of the individual anti-resonant microstructure units, evaluating the geometric uniformity of the optical fiber, and achieving the geometric uniformity detection of the hollow-core microstructured optical fibers, so as to solve the current technical problem of being unable to detect or monitor the geometric uniformity of the optical fiber.

In order to achieve the above objectives, according to one aspect of the present disclosure, there is provided a method for detecting an end face of a hollow-core microstructured optical fiber, comprising the following steps:

(1) Imaging the end face of the hollow-core microstructured optical fiber to obtain an image of the end face of the hollow-core microstructured optical fiber;
(2) Marking individual anti-resonant microstructure units in the image of the end face of the hollow-core microstructured optical fiber obtained in step (1) according to an asymmetry of the end face of the hollow-core microstructured optical fiber, so as to identify the individual anti-resonant microstructure units in the image of the end face of the hollow-core microstructured optical fiber; wherein the hollow-core microstructured optical fiber has a marking unit, a part of the end face of the hollow-core microstructured optical fiber except for the marking unit exhibits geometric symmetry, and the end face of hollow-core microstructured optical fiber with the marking unit exhibits asymmetry;
(3) For the individual anti-resonant microstructure units identified in step (2), separating corresponding end face images of the individual hollow-core anti-resonant microstructure units from the image of the end face of the hollow-core microstructured optical fiber obtained in step (1), performing geometric parameter extraction, and evaluating a geometric uniformity of the hollow-core microstructured optical fiber.

Preferably, according to the method for detecting the end face of the hollow-core microstructured optical fiber, wherein the hollow-core microstructured optical fiber has a circular outer contour.

Preferably, according to the method for detecting the end face of the hollow-core microstructured optical fiber, wherein the marking unit has a recognizable contour in the image of the end face of the hollow-core microstructured optical fiber.

Preferably, according to the method for detecting the end face of the hollow-core microstructured optical fiber, wherein the marking unit is a refractive index marking unit, a wavelength marking unit, a structure marking unit, or an heterogeneous marking unit; wherein,

the refractive index marking unit is a glass portion in an optical fiber glass part having a material refractive index different from that of the surrounding material thereof;

the wavelength marking unit is a glass portion in an optical fiber glass part having a different light transmittance for different wavelengths different from that of the surrounding material thereof;

the structure marking unit has a recognizable shape structure in the image of the end face, including an additive structure cladded on the hollow-core microstructured optical fiber and a subtractive structure cladded on the hollow-core microstructured optical fiber; and

the heterogeneous marking unit is a recognizable anti-resonant microstructure unit obtained by performing structure adjustment to an anti-resonant microstructure unit of the hollow-core microstructured optical fiber.

Preferably, according to the method for detecting the end face of the hollow-core microstructured optical fiber, the additive structure cladded on the hollow-core microstructured optical fiber is a tube, a rod, and/or a convex edge added for cladding; and the subtractive structure of the hollow-core microstructured optical fiber cladding is a groove or a drill hole.

Preferably, according to the method for detecting the end face of the hollow-core microstructured optical fiber, evaluating the geometric uniformity of the hollow-core microstructured optical fiber in step (3), is specifically achieved by one or a combination of the following methods:

(i) evaluating a geometric regularity of individual anti-resonant microstructure units, the geometric regularity being used to characterize a difference between the anti-resonant microstructure units and a theoretically designed anti-resonant microstructure unit, including but not limited to, whether a roundness and a size of the anti-resonant microstructure units meet theoretical design standards, or their differences from the theoretical design standards.

(ii) evaluating a geometric consistency between the individual anti-resonant microstructure units, the geometric consistency being used to characterize a geometric difference between the individual anti-resonant microstructure units, including but not limited to a size difference, an azimuth angle difference, and a relative position difference between the individual anti-resonant microstructure units.

(iii) Evaluating a geometric stability of the individual anti-resonant microstructure units, the geometric stability being used to characterize a difference between end faces of the anti-resonant microstructure units taken at different positions, including but not limited to a roundness difference, a size difference, an azimuth angle difference, and a relative position difference between the end faces of the anti-resonant microstructure units.

According to another aspect of the present disclosure, there is provided a marked hollow-core microstructured optical fiber which has a marking unit, wherein a part of an end face of the marked hollow-core microstructured optical fiber except for the marking unit exhibits geometric symmetry; and the end face of hollow-core microstructured optical fiber with the marking unit exhibits asymmetry.

Preferably, according to the marked hollow-core microstructured optical fiber, wherein the hollow-core microstructured optical fiber has a circular outer contour.

Preferably, according to the marked hollow-core microstructured optical fiber, wherein the marking unit has a recognizable contour in the image of the end face of the hollow-core microstructured optical fiber.

Preferably, according to the marked hollow-core microstructured optical fiber, wherein a distance between the marking unit and a structural center of the optical fiber is D, wherein,

$$E_D \leq 0.5\%$$

$$E_D = \int_0^{2\pi} \int_D^R f(r,\theta)\, r\, dr\, d\theta$$

wherein, $E_D$ is a proportion of energy distribution in a region where a distance from the structural center of the optical fiber on a cross section of the optical fiber is greater than $D$; for a point in a polar coordinate system with the structural center of the optical fiber as a pole within the cross section of the optical fiber, a polar diameter thereof is $r$, a polar angle thereof is $\theta$, and $f(r, \theta)$ is a normalized optical field distribution function of the cross section of the optical fiber; and R is a radius of the optical fiber;
and/or
the distance $D$ between the marking unit and a structural center of the optical fiber satisfies: $D \geq d$, wherein $d$ is a fiber core diameter of the hollow-core microstructured optical fiber.

Preferably, according to the marked hollow-core microstructured optical fiber, wherein the marking unit is a refractive index marking unit, a wavelength marking unit, a structure marking unit, or an heterogeneous marking unit; wherein,

the refractive index marking unit is a glass portion in an optical fiber glass part having a material refractive index different from that of the surrounding material thereof;

the wavelength marking unit is a glass portion in an optical fiber glass part having a different light transmittance for different wavelengths different from that of the surrounding material thereof;

the structure marking unit has a recognizable shape and structure in the image of the end face, including an additive structure cladded on the hollow-core microstructured optical fiber and a subtractive structure cladded on the hollow-core microstructured optical fiber; and

the heterogeneous marking unit is a recognizable anti-resonant microstructure unit obtained by performing structure adjustment to an anti-resonant microstructure unit of the hollow-core microstructured optical fiber.

Preferably, according to the marked hollow-core microstructured optical fiber, wherein the additive structure cladded on the hollow-core microstructured optical fiber is a tube, a rod, and/or a convex edge added for cladding; and the subtractive structure of the hollow-core microstructured optical fiber cladding is a groove or a drill hole.

Preferably, according to the marked hollow-core microstructured optical fiber, wherein a maximum refractive index difference between the refractive index marking unit and a surrounding cladding of the hollow-core microstructured optical fiber is between 0.0005 and 0.03, and an area of the refractive index marking unit accounts for 0.002%-2% of an area of a cladding of the optical fiber;

a transmittance difference at an operating wavelength between the wavelength marking unit and a surrounding cladding of the hollow-core microstructured optical fiber is 0.1% to 100%, and an area of the wavelength marking unit accounts for 0.002%-2% of an area of a cladding of the optical fiber;

an area of the structure marking unit accounts for 0.002%-2% of an area of a cladding of the optical fiber; and

the heterogeneous marking unit structure has a deviation amount of 0.8%-25%.

Overall, compared with the prior art, the above technical solutions conceived by the present disclosure can achieve the following beneficial effects:
by acquiring an asymmetric image of the end face of the hollow-core optical fiber, marking individual anti-resonant microstructure units and geometric parameters thereof according to an asymmetry of the end face of the hollow-core optical fiber, and evaluating the geometric uniformity, axial uniformity, and/or difference of the microstructure units, the method for detecting the end face of the hollow-core microstructured optical fiber provided by the present disclosure can achieve detection or monitoring of the geometric uniformity of the hollow-core optical fiber.

According to the marked hollow-core microstructured optical fiber provided by the present disclosure, an asymmetric image may be obtained without affecting transmission loss, thereby achieving detection or monitoring of geometric uniformity.

**Brief Description of the Drawings**

Fig. 1 is a normalized optical field distribution view of an optical fiber cross section involved in an end face of a hollow-core microstructured optical fiber that needs to be marked, as provided by an embodiment of the present disclosure;

Fig. 2 is a normalized optical field distribution view on a symmetrical axis of the hollow-core optical fiber that needs to be marked, as provided by the embodiment of the present disclosure;

Fig. 3 is a structural schematic view of an end face of a microstructural optical fiber with a refractive index marking unit, as provided by Embodiment 1 of the present disclosure;

Fig. 4 is a structural schematic view of an end face of a microstructural optical fiber with a wavelength marking unit, as provided by Embodiment 2 of the present disclosure;

Fig. 5 is a structural schematic view of an end face of a microstructural optical fiber with a heterogeneous marking unit, as provided by Embodiment 3 of the present disclosure; and

Fig. 6 is a schematic view of a hollow-core microstructured optical fiber with deteriorated geometric uniformity.

Through the drawings, the same reference numeral is used to represent the same element or structure, in which: 1 - Sleeve; 2 - Anti-resonant microstructure unit; 3-Refractive index marking unit; 4 - Wavelength marking unit; 5 - Heterogeneous marking unit; and θ - Azimuth angle deviatiom of the heterogeneous unit.

**Detailed Description of the Embodiments**

In order to make the objectives, technical solutions, and advantages of the present disclosure clearer and more understandable, hereafter, the present disclosure will be further illustrated in detail in combination with the embodiments. It should be understood that, the specific embodiments described herein are only used to explain the present disclosure, but are not intended to limit the present disclosure. In addition, the technical features involved in the various embodiments of the present disclosure described below may be combined with each other as long as they do not conflict with each other.

The method for detecting the end face of the hollow-core microstructured optical fiber provided by the present disclosure comprises the following steps:

(1) The end face of the hollow-core microstructured optical fiber is imaged to obtain an image of the end face of the hollow-core microstructured optical fiber. (2) Individual anti-resonant microstructure units in the image of the end face of the hollow-core microstructured optical fiber obtained in step (1) are marked according to an asymmetry of the end face of the hollow-core microstructured optical fiber, so as to identify the individual anti-resonant microstructure units in the image of the end face of the hollow-core microstructured optical fiber; wherein the hollow-core microstructured optical fiber has a marking unit, a part of the end face of the hollow-core microstructured optical fiber except for the marking unit exhibits geometric symmetry, the hollow-core microstructured optical fiber has a circular outer contour, and the end face of hollow-core microstructured optical fiber with the marking unit exhibits asymmetry.

The marking unit has a recognizable contour in the image of the end face of the hollow-core microstructured optical fiber, and may be a refractive index marking unit, a wavelength marking unit, a structure marking unit, or a heterogeneous marking unit.

The refractive index marking unit is a glass portion in an optical fiber glass part having a material refractive index different from that of the surrounding material thereof. Due to the difference in refractive index between the glass portion and the surrounding material, the contour of the glass portion, when being imaged under transmitted light or reflected light, may be recognized in the image of the end face of the hollow-core microstructured optical fiber, such that it has recognizability.

The wavelength marking unit is a glass portion in an optical fiber glass part having a different light transmittance for different wavelengths different from that of the surrounding material thereof. The contour of the glass portion, when being imaged under illumination of different wavelengths of light or illumination of mixed light, may be recognized in the image of the end face of the hollow-core microstructured optical fiber, such that it has recognizability; and it may be imaged under transmission or reflection.

The structure marking unit has a recognizable shape structure in the image of the end face, including an additive structure cladded on the hollow-core microstructured optical fiber and a subtractive structure cladded on the hollow-core microstructured optical fiber, thereby increasing the asymmetry of the cladding and achieving recognizable purpose. The additive structure cladded on the hollow-core microstructured optical fiber is a marker such as a tube, a rod, a convex edge, etc. added for cladding; and the subtractive structure of the hollow-core microstructured optical fiber cladding is a marking structure such as a groove, a drill hole, etc.

The heterogeneous marking unit is a recognizable anti-resonant microstructure unit obtained by performing structure adjustment to an anti-resonant microstructure unit of the hollow-core microstructured optical fiber. For example, the heterogeneous marking unit is an anti-resonant microstructure unit having a wall thickness, a diameter, a roundness, an azimuth angle, a gap distinct from that of other anti-resonant microstructure units. As for the heterogeneous marking unit, a part of the end face of the optical fiber except for the marking unit refers to a structure of the end face of the optical fiber where the heterogeneous marking unit is replaced with other anti-resonant microstructure units of the optical fiber, that is, an end face of the optical fiber where the "heterogeneous" factor is eliminated.

The hollow-core microstructured optical fiber with the marking unit exhibits asymmetry, which may be due to the asymmetry of the marking unit itself or due to that the position of the marking unit in the image of the end face of the hollow-core microstructured optical fiber destroys the symmetry of the end face of the hollow-core microstructured optical fiber. For example, the groove marker or the convex edge has an outer contour (such as a triangular outer contour) that does not match the symmetry of the end face of the optical fiber, thereby destroying the rotational symmetry of the end face the optical fiber. For another example, as for the glass silk marker having a circular outer contour, although its outer contour has a perfect symmetry, when the glass silk marker is located outside the symmetry axis or the symmetry center of the end face of the hollow-core microstructured optical fiber, the symmetry of the end face of the hollow-core microstructured optical fiber is destroyed.

(3) For the individual anti-resonant microstructure units identified in step (2), corresponding end face images of the individual hollow-core anti-resonant microstructure units are separated from the image of the end face of the hollow-core microstructured optical fiber obtained in step (1), and a geometric parameter extraction is performed, and a geometric uniformity of the hollow-core microstructured optical fiber is judged.

Evaluating the geometric uniformity of the hollow-core microstructured optical fiber in step (3), is specifically achieved by one or a combination of the following methods:

(i) evaluating a geometric regularity of the individual anti-resonant microstructure units, the geometric regularity being used to characterize a difference between the anti-resonant microstructure units and a theoretically designed anti-resonant microstructure unit, including but not limited to, whether a roundness a size and a thickness of the anti-resonant microstructure units meet theoretical design standards, or their differences from the theoretical design standards.

(ii) evaluating a geometric consistency between the individual anti-resonant microstructure units, the geometric consistency being used to characterize a geometric difference between the individual anti-resonant microstructure units, including but not limited to a size difference, a thickness difference, an azimuth angle difference, and a relative position difference between the individual microstructure units.

(iii) evaluating a geometric stability of the individual anti-resonant microstructure units, the geometric stability being used to characterize a difference between end faces of the anti-resonant microstructure units taken at different positions, including but not limited to a roundness difference, a size difference, a thickness difference, an azimuth angle difference, and a relative position difference between the end faces of the anti-resonant microstructure units.

In theory, the anti-resonant microstructure units of the hollow-core anti-resonant optical fiber have a relatively perfect symmetry. The hollow-core microstructured optical fibers generally used for communication have a cross-sectional structure rotationally symmetric about the center thereof, typically, the hollow-core anti-resonant optical fibers have a circular outer contour with a perfect symmetry. A symmetrical structural design will produce a lower theoretical loss. However, during the manufacture and process debugging of the hollow-core microstructured optical fibers with a symmetrical structure, it is difficult to distinguish the individual anti-resonant microstructure units. For example, when certain anti-resonant microstructure units are found to have a poor structural regularity upon end face inspection, it is difficult to confirm which anti-resonant microstructure unit in a preform suffers from poor process control during drawing and molding; similarly, when a plurality of anti-resonant microstructure units are found to be inconsistent upon end face image detection, it is difficult to judge which anti-resonant microstructure unit(s) has/have an unsatisfactory structure, such that it extremely time-consuming to explore for process adjustment. During multiple end face detections at different positions, it is difficult to correspond different anti-resonant microstructure units, and it is difficult to observe the change of the same one anti-resonant microstructure unit at different positions.

Therefore, making the end face of the hollow-core anti-resonant optical fiber asymmetric so as to identify individual symmetrical anti-resonant microstructure units is of great significance for the detection of the end face of the hollow-core microstructured optical fiber, such that the end face detection may be used to detect or monitor the geometric uniformity of the hollow-core anti-resonant optical fiber, thus it may be used for process feedback and adjustment of optical fibers, and may also be used for product quality control.

The hollow-core microstructured optical fiber provided by the present disclosure has a marking unit, wherein a part of the end face of the hollow-core microstructured optical fiber except for the marking unit exhibits geometric symmetry, and the hollow-core microstructured optical fiber has a circular outer contour; and the end face of hollow-core microstructured optical fiber with marking unit exhibits asymmetry.

The marking unit has a recognizable contour in the image of the end face of the hollow-core microstructured optical fiber, and may be a refractive index marking unit, a wavelength marking unit, a structure marking unit, or a heterogeneous marking unit;

The refractive index marking unit is a glass portion in an optical fiber glass part having a material refractive index different from that of the surrounding material thereof. Due to the difference in refractive index between the glass portion and the surrounding material, the contour of the glass portion, when being imaged under transmitted or reflected light, may be recognized in the image of the end face of the hollow-core microstructured optical fiber, such that it has recognizability.

The wavelength marking unit is a glass portion in an optical fiber glass part having a different light transmittance for different wavelengths different from that of the surrounding material. The contour of the glass portion, when being imaged under illumination of different wavelengths of light or illumination of mixed light, may be recognized in the image of the end face of the hollow-core microstructured optical fiber, such that it has recognizability.

The structure marking unit has a recognizable shape structure in the image of the end face, including an additive structure cladded on the hollow-core microstructured optical fiber and a subtractive structure cladded on the hollow-core microstructured optical fiber, thereby increasing the asymmetry of the cladding and achieving recognizable purpose. The additive structure cladded on the hollow-core microstructured optical fiber is a maker such as a tube, a rod, a convex edge, etc. added for cladding; and the subtractive structure of the hollow-core microstructured optical fiber cladding is a marking structure such as a groove, a drill hole, etc.

The heterogeneous marking unit is a recognizable anti-resonant microstructure unit obtained by performing structure adjustment to an anti-resonant microstructure unit of the hollow-core microstructured optical fiber. For example, the heterogeneous marking unit is an anti-resonant microstructure unit having a wall thickness, a diameter, a roundness, an azimuth angle, a gap distinct from that of other anti-resonant microstructure units.

However, unlike a solid optical fiber whose performance is mainly determined by the refractive index profile of the core and the cladding thereof, the transmission performance of the hollow-core microstructured optical fiber is sensitive to structure and material, which is determined by the optical transmission principle of the hollow-core microstructured optical fiber. The light guiding principle of the hollow-core anti-resonant optical fiber may be set forth by means of an anti-resonant waveguide theory and a suppression coupling theory.

The anti-resonant waveguide theory is as follows: when a beam of light is incident from one medium into another medium, if the size of the medium is much larger than the light wavelength, the interference of the light may be ignored at this point, and a part of the total optical power will be transmitted while the other part will be reflected. If the thickness of the medium is comparable to the wavelength of the light, it can be regarded that a Fabry-Perot ( F-P ) interference cavity is formed, and the transmitted light will be coherently constructive or destructive as a function of wavelength. When such elements are used as confinement condition for waveguides, it can be found that, light may be transmitted with low loss at certain wavelengths. Based on the anti-resonant waveguide theory, the shape structure of the anti-resonant microstructure unit (especially the thickness of the medium) are of great importance for the performance of the optical fiber.

The suppression coupling theory is to suppress the coupling between the fiber core mode and the cladding mode in the hollow-core anti-resonant optical fiber. Generally, the phase mismatch between the fiber core fundamental mode and the cladding mode is achieved by increasing the difference in effective refractive index between them, thereby reducing the coupling loss of the fundamental mode, and the high-order mode may be allowed to be in a high loss state through an opposite method, in which the key factor lies in the structural design of the cladding.

Therefore, when the marking unit is arranged in the hollow-core microstructured optical fiber for marking during end face detection, the type and position of the marking unit is of great influence on maintaining the basic performance of the optical fiber. In a region where the energy distribution of the optical fiber on the outer side of the fiber core is less than 0.5%, the arrangement of the marking unit has little influence on the performance of the optical fiber, that is,

a distance between the marking unit and a structural center of the optical fiber is D, wherein,

$$E_D \leq 0.5\%$$

$$E_D = \int_0^{2\pi} \int_D^R f(r,\theta) r dr d\theta$$

wherein, $E_D$ is a proportion of energy distribution in a region where a distance from the structural center of the optical fiber on a cross section of the optical fiber is greater than $D$; for a point in a polar coordinate system with the structural center of the optical fiber as a pole within the cross section of the optical fiber, a polar diameter thereof is $r$, a polar angle thereof is $\theta$, and $f(r, \theta)$ is a normalized optical field distribution function of the cross section of the optical fiber; and R is a radius of the optical fiber.

Experimental data shows that, generally, the marking unit should be arranged in a region where a distance from the structural center of the optical fiber exceeds the diameter of the fiber core. In this way, the influence of the marking unit on the performance of the optical fiber is much smaller than that caused by geometric unevenness during the manufacturing process. The performance deterioration caused by transmission loss due to the marking unit is within 10%, while the geometric unevenness during the manufacturing process generally leads to an order of magnitude deterioration (10 to 1000 times) in transmission loss. Using the marking unit for end face detection is beneficial for improving the transmission loss performance of the optical fiber. That is, the distance D between the marking unit and the structural center of the optical fiber satisfies: $D \geq d$, where $d$ is the fiber core diameter of the hollow-core microstructured optical fiber.

And for the heterogeneous marking unit, a structural difference also need to be controlled. A structural deviation amount of the heterogeneous marking unit should be 0.8%-25%. As for a difference parameter between the heterogeneous marking unit and other anti-resonant microstructure units of the optical fiber, a percentage of a difference value between the heterogeneous unit and other anti-resonant microstructure units to this parameter value of the other anti-resonant microstructure units is the structural deviation amount of heterogeneous marking unit.

In particular,
As for the refractive index marking unit, the refractive index thereof may be higher than or lower than the refractive index of the surrounding cladding of the hollow-core microstructured optical fiber, but the maximum refractive index difference value between the refractive index marking unit and the surrounding cladding of the hollow-core microstructured optical fiber is between 0.0005 and 0.03, and the area of the refractive index marking unit accounts for 0.002to 2% of the area of the cladding of the optical fiber.

As for the wavelength marking unit, the transmittance at an operating wavelength thereof may be higher than or lower than the transmittance of the surrounding cladding of the hollow-core microstructured optical fiber, but the transmittance difference value between the wavelength marking unit and the surrounding cladding of the hollow-core microstructured optical fiber is 0.1% to 100%, and the area of the wavelength marking unit accounts for 0.002 to 2% of the area of the cladding of the optical fiber.

As for structure marking unit, the area thereof should be more than 0.002% and less than or equal to 2% of the area of the cladding of the optical fiber.

The heterogeneous marking unit may be marked by a structural difference including but not limited to: a wall thickness difference, a diameter difference, a roundness difference, an azimuth angle difference, a gap difference, etc. of the anti-resonant microstructure unit, with a structural deviation amount of 0.8% to 25%. The structural deviation amount refers to the degree of difference in indicators with differences between the heterogeneous marking unit and other anti-resonant microstructure units.

The above marking unit parameters is used to balance the recognizability of the marking unit and the influence of the marking unit on the optical performance of the optical fiber.

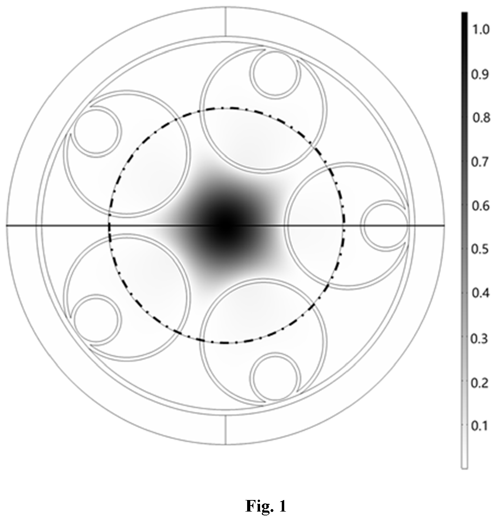

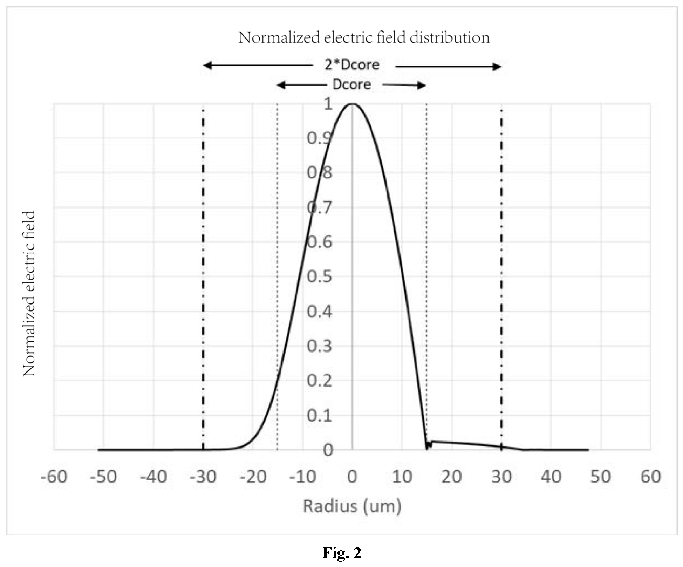

The embodiments will be described as follows: In the embodiments, the end face of the hollow-core microstructured optical fiber that needs to be marked involves the normalized optical field distribution view of the cross section of the optical fiber, as shown in Figure 1. The cladding of the anti-resonant microstructural optical fiber comprises an outer cladding formed by a sleeve and an anti-resonant cladding formed by anti-resonant microstructure units. The inner wall of the sleeve is formed with the anti-resonant cladding of the optical fiber formed by 5 anti-resonant microstructure units, and the inscribed circle of the anti-resonant cladding is the fiber core of the hollow-core microstructured optical fiber. The diameter of the fiber core is Dcore, and the Dcore in this embodiment is 30 um. The diameter of the large tube in the anti-resonant microstructure unit is Dcore*105%, and the diameter of the small tube is Dcore*45%. The large tube is tangentially nested with the small tube, and the tangential plane is fixed to the sleeve. The structural center of the optical fiber is located on the extension lines of the symmetry axes of individual anti-resonant microstructure units; and the normalized optical field distribution view on the symmetry axis of the optical fiber (i.e. the horizontal solid black line in Figure 1) is shown in Figure 2.

The dotted portions in Figures 1 and 2 represent a region where a distance from the structural center of the optical fiber exceeds the diameter of the fiber core of the optical fiber, that is, a region where a distance from the geometric center of the end face is greater than or equal to 30 um. Within this region, it is defined as an optical field affected region, and a region outside this region is defined as the optical field unaffected region. The light field intensity within the range of the optical field affected region accounts for 99.93% of the light field intensity of the entire cross section of the optical fiber, while the light field intensity within the optical field unaffected region only accounts for 0.07% of the light field intensity of the entire cross section of the optical fiber. The marking unit is located in the optical field unaffected region and has no significant influence on the transmission characteristics of the hollow-core microstructured optical fiber.

The marking unit of Embodiments is specifically as follows:

Embodiment 1

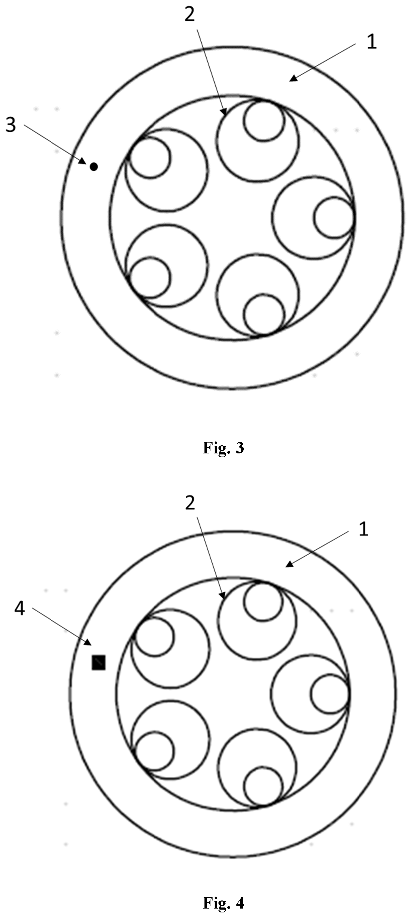

The refractive index marking unit was used for marking, as shown in Figure 3: the cladding of the hollow-core optical fiber was made of pure silicon dioxide material, and a marking unit with high refractive index was arranged inside the cladding. The diameter of the marking unit was 3.8 um, and the maximum refractive index difference value between the refractive index marking unit and the surrounding cladding of the hollow-core microstructured optical fiber was 0.006, and the area of the refractive index marking unit accounts for 0.027% of the area of the cladding of the optical fiber. A line connecting the center of the refractive index marking unit and fiber structural center is between the symmetry axes of two adjacent anti-resonant microstructure units, and was closer to one of them, thereby destroying the rotational symmetry of the end face of the optical fiber and endowing asymmetry. When a transmitted light is used to observe the end face of the optical fiber under a microscope, the position of the refractive index marking unit may be clearly identified.

Embodiment 2

The wavelength marking unit was used for marking, as shown in Figure 4: the cladding of the hollow-core optical fiber was prepared by a multi-component glass material, and a marking unit with the same refractive index but different transmittance was arranged inside the cladding, such that the transmittance of the marking unit to visible light was different from the transmittance of other regions of the cladding. The marking unit was a square with a side length of 7.9 um, the transmittance difference value between the marking unit and the surrounding cladding of the hollow-core microstructured optical fiber was 23%, and the area of the marking unit accounts for 0.117% of the area of the cladding of the optical fiber. A line connecting the center of the marking unit and the structural center of the optical fiber was between the symmetry axes of two adjacent anti-resonant microstructure units, and was closer to one of them, thereby destroying the rotational symmetry of end face of the optical fiber and endowing asymmetry. When a transmitted light is illuminate to observe the end face of the optical fiber under a microscope, since the transmittance of the marking unit was significantly lower than that of the surrounding cladding of the hollow-core microstructured optical fiber, the position of the marking unit may be clearly identified.

Embodiment 3

The heterogeneous marking unit was used for marking, as shown in Figure 5: the cladding of the hollow-core optical fiber was made of pure silicon dioxide material, and 5 anti-resonant microstructure units were adopted to reduce the loss of the optical fiber. One of the anti-resonant microstructure units has the small tube deflected by an angle of 15°, that is, the azimuth angle difference was 15°. The deviation amount was defined as 15°/180°=8.3%. When a transmitted light is illuminate to observe the end face of the optical fiber under a microscope, the position of the anti-resonant unit with azimuth angle deflection may be clearly identified.

The hollow-core microstructured optical fibers provided in Embodiments 1 to 3 were subjected to end face detection by a method comprising the following steps:

(1) Imaging the end face of the hollow-core microstructured optical fiber to obtain an image of the end face of the hollow-core microstructured optical fiber;
(2) Marking individual anti-resonant microstructure units in the image of the end face of the hollow-core microstructured optical fiber obtained in step (1) according to an asymmetry of the end face of the hollow-core microstructured optical fiber, so as to identify the individual anti-resonant microstructure units in the image of the end face of the hollow-core microstructured optical fiber;
(3) For the individual anti-resonant microstructure units identified in step (2), separating corresponding end face images of the individual hollow-core anti-resonant microstructure units from the image of the end face of the hollow-core microstructured optical fiber obtained in step (1), performing geometric parameter extraction, and evaluating a geometric uniformity of the hollow-core microstructured optical fiber.

Evaluating the geometric uniformity of the hollow-core microstructured optical fiber is specifically achieved by one or a combination of the following methods:

(i) evaluating a geometric regularity of the individual anti-resonant microstructure units, the geometric regularity being used to characterize a difference between the anti-resonant microstructure units and a theoretically designed anti-resonant microstructure unit, including but not limited to, whether a roundness and a size of the anti-resonant microstructure units meet theoretical design standards, or their differences from the theoretical design standards.
(ii) evaluating a geometric consistency between the individual anti-resonant microstructure units, the geometric consistency being used to characterize a geometric difference between the individual anti-resonant microstructure units, including but not limited to, a size difference, an azimuth angle difference, and a relative position difference between the individual microstructure units.
(iii) evaluating a geometric stability of the individual anti-resonant microstructure units, the geometric stability being used to characterize a difference between end faces of the anti-resonant microstructure units taken at different positions, including but not limited to, a roundness difference, a size difference, a thickness difference, an azimuth angle difference, and a relative position difference between the end faces of the anti-resonant microstructure units.

Those skilled in the art may easily understand that the above embodiments are only the preferred embodiments of the present disclosure, but are not intended to limit the present disclosure. Any modifications, equivalent substitutions, improvements, etc. made within the spirit and principle of the present disclosure should be encompassed within the scope of protection of the present disclosure.

## Claims

1. A method for detecting an end face of a hollow-core microstructured optical fiber, **characterized by** comprising the following steps:

(1) Imaging the end face of the hollow-core microstructured optical fiber to obtain an image of the end face of the hollow-core microstructured optical fiber;
(2) Marking individual anti-resonant microstructure units in the image of the end face of the hollow-core microstructured optical fiber obtained in step (1) according to an asymmetry of the end face of the hollow-core microstructured optical fiber, so as to identify the individual anti-resonant microstructure units in the image of the end face of the hollow-core microstructured optical fiber; wherein the hollow-core microstructured optical fiber has a marking unit, a part of the end face of the hollow-core microstructured optical fiber except for the marking unit exhibits geometric symmetry, and the end face of hollow-core microstructured optical fiber with the marking unit exhibits asymmetry;
(3) For the individual anti-resonant microstructure units identified in step (2), separating corresponding end face images of the individual hollow-core anti-resonant microstructure units from the image of the end face of the hollow-core microstructured optical fiber obtained in step (1), performing geometric parameter extraction, and evaluating a geometric uniformity of the hollow-core microstructured optical fiber.

**2.** The method for detecting the end face of the hollow-core microstructured optical fiber of claim 1, **characterized in that**, the hollow-core microstructured optical fiber has a circular outer contour.

**3.** The method for detecting the end face of the hollow-core microstructured optical fiber of claim 1 or 2, **characterized in that**, the marking unit has a recognizable contour in the image of the end face of the hollow-core microstructured optical fiber.

**4.** The method for detecting the end face of the hollow-core microstructured optical fiber of claim 3, **characterized in that**, the marking unit is a refractive index marking unit, a wavelength marking unit, a structure marking unit, or an heterogeneous marking unit; wherein,

the refractive index marking unit is a glass portion in an optical fiber glass part having a material refractive index different from that of a surrounding material thereof;

The wavelength marking unit is a glass portion in an optical fiber glass part having a different light transmittance for different wavelengths different from that of the surrounding material thereof;

the structure marking unit has a recognizable shape structure in the image of the end face, including an additive structure cladded on the hollow-core microstructured optical fiber and a subtractive structure cladded on the hollow-core microstructured optical fiber; and

the heterogeneous marking unit is a recognizable anti-resonant microstructure unit obtained by performing structure adjustment to an anti-resonant microstructure unit of the hollow-core microstructured optical fiber.

**5.** The method for detecting the end face of the hollow-core microstructured optical fiber of claim 4, **characterized in that**, the additive structure cladded on the hollow-core microstructured optical fiber is is one or more of a tube, a rod, and a convex edge added for cladding; and the subtractive structure of the hollow-core microstructured optical fiber cladding is a groove or a drill hole.

**6.** The method for detecting the end face of the hollow-core microstructured optical fiber of claim 1, **characterized in that**, evaluating the geometric uniformity of the hollow-core microstructured optical fiber in step (3), is specifically achieved by one or a combination of the following methods:

(i) evaluating a geometric regularity of the individual anti-resonant microstructure units, the geometric regularity being used to characterize a difference between the anti-resonant microstructure units and a theoretically designed anti-resonant microstructure unit, including but not limited to, whether a roundness and a size of the anti-resonant microstructure units meet theoretical design standards, or their differences from the theoretical design standards.

(ii) evaluating a geometric consistency between the individual anti-resonant microstructure units, the geometric consistency being used to characterize a geometric difference between the individual anti-resonant microstructure units, including but not limited to a size difference, an azimuth angle difference, and a relative position difference between the microstructure units.

(iii) evaluating a geometric stability of the individual anti-resonant microstructure units, the geometric stability being used to characterize a difference between end faces of the anti-resonant microstructure units taken at different positions, including but not limited to a roundness difference, a size difference, an azimuth angle difference, and a relative position difference between the end faces of the anti-resonant microstructure units.

**7.** A marked hollow-core microstructured optical fiber, **characterized by** having a marking unit, wherein a part of an end face of the marked hollow-core microstructured optical fiber except for the marking unit exhibits geometric symmetry; and the end face of the hollow-core microstructured optical fiber with the marking unit exhibits asymmetry.

**8.** The marked hollow-core microstructured optical fiber of claim 7, **characterized in that**, the hollow-core microstructured optical fiber has a circular outer contour.

**9.** The marked hollow-core microstructured optical fiber of claim 7 or 8, **characterized in that**, the marking unit has a recognizable contour in the image of the end face of the hollow-core microstructured optical fiber.

**10.** The marked hollow-core microstructured optical fiber of claim 9, **characterized in that**, a distance between the marking unit and a structural center of the optical fiber is D, wherein,

$$E_D \leq 0.5\%$$

$$E_D = \int_0^{2\pi} \int_D^R f(r, \theta) r \, dr \, d\theta$$

wherein, $E_D$ is a proportion of energy distribution in a region where a distance from the structural center of the optical fiber on a cross section of the optical fiber is greater than $D$; for a point in a polar coordinate system with the structural center of the optical fiber as a pole within the cross section of the optical fiber, a polar diameter thereof is $r$, a polar angle thereof is $\theta$, and $f(r, \theta)$ is a normalized optical field distribution function of the cross section of the optical fiber; and R is a radius of the optical fiber;

and/or

the distance $D$ between the marking unit and a structural center of the optical fiber satisfies: $D \geq d$, wherein $d$ is a fiber core diameter of the hollow-core microstructured optical fiber.

11. The marked hollow-core microstructured optical fiber of claim 9, **characterized in that**, the marking unit is a refractive index marking unit, a wavelength marking unit, a structure marking unit, or an heterogeneous marking unit; wherein,

the refractive index marking unit is a glass portion in an optical fiber glass part having a material refractive index different from that of a surrounding material thereof;

The wavelength marking unit is a glass portion in an optical fiber glass part having a different light transmittance for different wavelengths different from that of the surrounding material thereof;

the structure marking unit has a recognizable shape and structure in the image of the end face, including an additive structure cladded on the hollow-core microstructured optical fiber and a subtractive structure cladded on the hollow-core microstructured optical fiber; and

the heterogeneous marking unit is a recognizable anti-resonant microstructure unit obtained by performing structure adjustment to an anti-resonant microstructure unit of the hollow-core microstructured optical fiber.

12. The marked microstructural optical fiber of claim 11, **characterized in that**, the additive structure cladded on the hollow-core microstructured optical fiber is one or more of a tube, a rod, and a convex edge added for cladding; and the subtractive structure of the hollow-core microstructured optical fiber cladding is a groove and/or a drill hole.

13. The marked hollow-core microstructured optical fiber of claim 11, **characterized in that**, a maximum refractive index difference between the refractive index marking unit and a surrounding cladding of the hollow-core microstructured optical fiber is between 0.0005 and 0.03, and an area of the refractive index marking unit accounts for 0.002% to2% of an area of a cladding of the optical fiber;

a transmittance difference at an operating wavelength between the wavelength marking unit and a surrounding cladding of the hollow-core microstructured optical fiber is 0.1% to 100%, and an area of the wavelength marking unit accounts for 0.002% to 2% of an area of a cladding of the optical fiber;

an area of the structure marking unit accounts for 0.002% to 2% of an area of a cladding of the optical fiber; and

the heterogeneous marking unit structure has a deviation amount of 0.8% to 25%.

Fig. 1

**Fig. 2**

Fig. 3

Fig. 4

**Fig. 5**

**Fig. 6**

## INTERNATIONAL SEARCH REPORT

International application No.

**PCT/CN2024/120328**

| A. CLASSIFICATION OF SUBJECT MATTER |
|---|
| G01M11/00(2006.01)i |
| According to International Patent Classification (IPC) or to both national classification and IPC |

| B. FIELDS SEARCHED |
|---|
| Minimum documentation searched (classification system followed by classification symbols) |
| IPC:G01M,G02B |
| Documentation searched other than minimum documentation to the extent that such documents are included in the fields searched |
| |
| Electronic data base consulted during the international search (name of data base and, where practicable, search terms used) |
| CNABS, CNTXT, WPABSC, ENTXTC, DWPI, VEN, ENTXT, CNKI, 万方, WANFANG, 百度学术, BAIDU SCHOLAR, 超星读秀, DUXIU: 空心, 空芯, 光纤, 反谐振, 芯, 端面, 侧面, 图像, 成像, 均匀, 对称, 尺寸, 圆度, 角, 位置, 评价, 评估, 检测, 测定, 分析, 测试, 判断, 判别, 标记, 标识, 记号, 识别, 标准, 参考, hollow, core, fiber?, fibre?, imag+, sign+, label+, identif +, uniform+, evaluat+, judg+, compar+, refer+ |

| C. DOCUMENTS CONSIDERED TO BE RELEVANT | | |
|---|---|---|
| Category* | Citation of document, with indication, where appropriate, of the relevant passages | Relevant to claim No. |
| PX | CN 117405355 A (YANGTZE OPTICAL FIBRE AND CABLE JOINT STOCK LIMITED COMPANY) 16 January 2024 (2024-01-16)<br>claims 1-13 | 1-13 |
| X | CN 112859233 A (BEIJING UNIVERSITY OF TECHNOLOGY) 28 May 2021 (2021-05-28)<br>description, paragraphs 0033-0040, and figures 1-4 | 7-13 |
| A | CN 106575014 A (SUMITOMO ELECTRIC INDUSTRIES, LTD.) 19 April 2017 (2017-04-19)<br>entire document | 1-13 |
| A | CN 111095059 A (UNIVERSITY OF SOUTHAMPTON) 01 May 2020 (2020-05-01)<br>entire document | 1-13 |
| A | CN 116661054 A (YANGTZE OPTICAL FIBRE AND CABLE JOINT STOCK LIMITED COMPANY) 29 August 2023 (2023-08-29)<br>entire document | 1-13 |

☑ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **03 January 2025** | **08 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/120328** |

**C. DOCUMENTS CONSIDERED TO BE RELEVANT**

| Category* | Citation of document, with indication, where appropriate, of the relevant passages | Relevant to claim No. |
|---|---|---|
| A | CN 112698439 A (WUHAN ANYANG LASER TECHNOLOGY CO., LTD.) 23 April 2021 (2021-04-23)<br>entire document | 1-13 |
| A | CN 116819703 A (WUHAN RUIXIN SPECIALTY FIBER CO., LTD.) 29 September 2023 (2023-09-29)<br>entire document | 1-13 |
| A | CN 112255740 A (YANGTZE OPTICAL FIBRE AND CABLE JOINT STOCK LIMITED COMPANY) 22 January 2021 (2021-01-22)<br>entire document | 1-13 |
| A | US 2003174986 A1 (MICRON TECHNOLOGY INC.) 18 September 2003 (2003-09-18)<br>entire document | 1-13 |
| A | US 2021396927 A1 (LUMENISITY LTD.) 23 December 2021 (2021-12-23)<br>entire document | 1-13 |
| A | US 2014270666 A1 (OFS FITEL, LLC) 18 September 2014 (2014-09-18)<br>entire document | 1-13 |

Form PCT/ISA/210 (second sheet) (July 2022)

**INTERNATIONAL SEARCH REPORT**
Information on patent family members

International application No.

**PCT/CN2024/120328**

| Patent document cited in search report | | | Publication date (day/month/year) | Patent family member(s) | | | Publication date (day/month/year) |
|---|---|---|---|---|---|---|---|
| CN | 117405355 | A | 16 January 2024 | None | | | |
| CN | 112859233 | A | 28 May 2021 | None | | | |
| CN | 106575014 | A | 19 April 2017 | JPWO | 2016027896 | A1 | 15 June 2017 |
| | | | | JP | 6421822 | B2 | 14 November 2018 |
| | | | | WO | 2016027896 | A1 | 25 February 2016 |
| | | | | US | 2016238783 | A1 | 18 August 2016 |
| | | | | US | 9891376 | B2 | 13 February 2018 |
| | | | | DK | 3185055 | T3 | 15 February 2021 |
| | | | | EP | 3185055 | A1 | 28 June 2017 |
| | | | | EP | 3185055 | B1 | 20 January 2021 |
| CN | 111095059 | A | 01 May 2020 | US | 2020278491 | A1 | 03 September 2020 |
| | | | | US | 11215751 | B2 | 04 January 2022 |
| | | | | JP | 2020533264 | A | 19 November 2020 |
| | | | | JP | 7193530 | B2 | 20 December 2022 |
| | | | | EP | 3682273 | A1 | 22 July 2020 |
| | | | | EP | 3682273 | B1 | 05 June 2024 |
| | | | | DK | 3682273 | T3 | 26 August 2024 |
| | | | | WO | 2019053412 | A1 | 21 March 2019 |
| | | | | GB | 201714739 | D0 | 25 October 2017 |
| | | | | GB | 2566466 | A | 20 March 2019 |
| CN | 116661054 | A | 29 August 2023 | None | | | |
| CN | 112698439 | A | 23 April 2021 | None | | | |
| CN | 116819703 | A | 29 September 2023 | None | | | |
| CN | 112255740 | A | 22 January 2021 | None | | | |
| US | 2003174986 | A1 | 18 September 2003 | US | 6829421 | B2 | 07 December 2004 |
| | | | | US | 2004175085 | A1 | 09 September 2004 |
| | | | | US | 6950585 | B2 | 27 September 2005 |
| US | 2021396927 | A1 | 23 December 2021 | JP | 2022502717 | A | 11 January 2022 |
| | | | | JP | 7333822 | B2 | 25 August 2023 |
| | | | | WO | 2020070488 | A1 | 09 April 2020 |
| | | | | US | 2024053534 | A1 | 15 February 2024 |
| | | | | EP | 3861385 | A1 | 11 August 2021 |
| | | | | US | 11835755 | B2 | 05 December 2023 |
| | | | | SG | 11202102193 | PA | 29 April 2021 |
| US | 2014270666 | A1 | 18 September 2014 | US | 9158065 | B2 | 13 October 2015 |

Form PCT/ISA/210 (patent family annex) (July 2022)